# FASCICULE DE BREVET EUROPEEN

(11) **EP 2 225 900 B1**
(45) Date de publication et mention de la délivrance du brevet: **21.03.2018**
(21) Numéro de dépôt: 08840960.2
(22) Date de dépôt: 17.10.2008
(51) Int. Cl.: H04W 24/02, H04W 16/18

(54) **CONFIGURATION D'UNE COUVERTURE RADIO**
KONFIGURATION EINER FUNKABDECKUNG
CONFIGURATION OF A RADIO COVERAGE

(30) Priorité: 26.10.2007 FR 0707554
(43) Date de publication de la demande: 08.09.2010
(73) Titulaire: 3G Licensing S.A., 2132 Luxembourg (LU)
(72) Inventeur: KARIM, Fatima, F-75013 Paris (FR); BEN JEMAA, Sana, F-92130 Issy Les Moulineaux (FR)
(74) Mandataire: Camolese, Marco
(86) Numéro de dépôt international: PCT/FR2008/051882
(87) Numéro de publication internationale: WO 2009/053658

(56) Documents cités:
- EP-A- 1 081 972
- GB-A- 2 311 912
- US-A1- 2005 136 911
- US-B1- 6 456 652

## Description

La présente invention concerne les réseaux de télécommunications radio et, plus particulièrement, une planification et une optimisation de couvertures radio dans de tels réseaux.

Chacune des cellules radio qui composent un réseau de télécommunications multicellulaire fournit une couverture radio d'une zone géographique cible. L'ensemble de toutes les couvertures radio des différentes cellules définit la couverture globale du réseau multicellulaire considéré.

Il est important que cette couverture radio globale respecte certaines contraintes.

Une première contrainte est d'offrir une couverture radio globale effective, c'est-à-dire fournie effectivement par le réseau, qui corresponde à une couverture radio cible, c'est-à-dire à la couverture d'une zone géographique ou espace défini préalablement.

Une seconde contrainte est d'éviter l'apparition d'interférences, due à la superposition de couvertures radio cellulaires. En effet, lorsque la superposition de deux couvertures radio est trop prononcée, ou lorsqu'un niveau de densité de cellules est important en un certain lieu, il peut se produire des interférences qui peuvent entraîner une réduction du niveau de qualité des communications gérées dans le réseau.

La qualité de service correspondant aux communications gérées dans ce type de réseaux repose donc notamment sur un équilibre entre ces deux contraintes qui sont donc une contrainte relative à la couverture radio et une contrainte relative aux interférences radio.

Il n'est pas aisé de déterminer une configuration de la couverture radio basée sur un tel équilibre qui doit prendre en compte un grand nombre de paramètres. En outre, dès que l'architecture du réseau cellulaire considéré est modifiée, il convient de déterminer une nouvelle configuration de couverture radio reposant sur un nouvel équilibre entre ces contraintes.

Une telle configuration est requise au moment de l'installation du réseau, ou encore au moment où une nouvelle cellule est introduite dans un réseau existant. Une telle phase de configuration de couverture radio est dite 'phase de planification de couverture radio'.

Une telle planification est en général basée sur des outils de planification qui sont indépendants de l'architecture du réseau considéré et elle est déterminée bien avant que l'installation du réseau ait lieu. Puis, une fois que les paramètres de planification sont déterminés via de tels outils de planification, une intervention manuelle humaine est ensuite requise pour mettre effectivement en place ces nouveaux paramètres.

Par ailleurs, afin d'améliorer le niveau de qualité d'un tel réseau en cours de fonctionnement, on peut être amené à prévoir une nouvelle configuration de la couverture radio. Cette nouvelle configuration est également obtenue comme décrit ci-dessus pour la phase de planification. On parle alors d'une 'phase d'optimisation de couverture radio'.

La demande de brevet GB-2311912 divulgue un système de communication sans fil, dans lequel les paramètres de configuration sont ajustés automatiquement sur la base de mesures de caractéristiques de propagation des signaux dans la zone couverte par le système. Ces caractéristiques peuvent être la force des signaux reçus par des terminaux mobiles, compte tenu des valeurs de puissance de transmission des stations de base du système. On peut ainsi fixer la puissance de transmission des stations de base lorsqu'une station de base est ajoutée ou retirée du système.

Le brevet US-6,456,652 divulgue un procédé pour optimiser la couverture des liens descendants dans un système de communication à étalement de spectre. Dans une zone choisie couverte par le système, on place un terminal mobile, qui reçoit un signal de test transmis par une station de base à une puissance déterminée. Si la qualité du signal reçu par le terminal n'est pas satisfaisante, on modifie les paramètres du signal de test, et l'on examine à nouveau la qualité du signal reçu par le terminal.

La demande de brevet US-2005/0136911 concerne un serveur de couverture dans un réseau sans fil. Le serveur de couverture identifie les zones dans lesquelles la couverture est mauvaise et les zones dans lesquelles la couverture est bonne, sur la base de statistiques d'appels perdus en provenance de terminaux mobiles en communication avec les stations de base du réseau.

La demande de brevet EP-1081972 divulgue un procédé pour déterminer la couverture d'un réseau sans fil dans une zone choisie. Selon ce procédé, on informe une station de base de la localisation géographique d'un certain terminal mobile, puis on teste la qualité d'un signal montant ou descendant transmis entre la station de base et le terminal mobile.

La présente invention vise à améliorer la situation.

Un premier aspect de la présente invention propose un procédé de configuration de couverture radio selon la revendication 1. On entend par les termes 'cellules radio voisines' d'une cellule radio donnée, des cellules radio dont la couverture radio est géographiquement limitrophe à la zone géographique couverte par la cellule radio donnée.

On entend par les termes 'couverture radio effective', la couverture radio qui est effectivement fournie par une cellule radio opérationnelle, c'est-à-dire une cellule radio qui est en mesure de gérer une communication.

On entend par les termes 'couverture radio cible', la couverture radio qui est associée de manière théorique à une cellule radio, c'est-à-dire l'espace géographique que l'on vise à couvrir par cette cellule.

La puissance de transmission donnée utilisée à l'étape /a/ peut être un paramètre de configuration du réseau.

Grâce à de telles dispositions, on est en mesure d'offrir une configuration automatique de la couverture radio d'un réseau de communication.

En procédant ainsi, on ne modifie pas la couverture radio des cellules du réseau pour lesquelles la puissance de transmission est adaptée. De ce fait, on peut optimiser la charge de signalisation liée à ce procédé dans le réseau.

Une telle configuration automatique de la couverture radio peut être mise en oeuvre à la fois dans le contexte d'une planification et dans le contexte d'une optimisation de couverture radio.

Ainsi, une intervention manuelle humaine pour configurer la couverture radio d'un réseau cellulaire n'est plus requise ni à l'installation du réseau, ni lors de l'introduction d'une nouvelle cellule du réseau. En effet, cette configuration peut être effectuée de manière automatique selon un mode de réalisation de la présente invention.

En outre, relativement à une optimisation de la couverture radio, les potentiels problèmes d'interférence entre les différentes cellules peuvent avantageusement être résolus de manière dynamique et automatique, sans que, là non plus, une intervention humaine ne soit requise.

De telles caractéristiques permettent d'améliorer la qualité de service offerte dans un tel réseau, tout en limitant le coût attaché à la gestion de la configuration de la couverture radio d'un tel réseau.

Les nouvelles valeurs de puissance de transmission peuvent être déterminées sur la base d'une comparaison entre les couvertures radio effectives et les couvertures radio cibles respectives des cellules du groupe de cellules radio et une analyse des indicateurs de qualité de ces cellules radio.

L'ensemble d'au moins une cellule radio est un ensemble comprenant au moins une nouvelle cellule radio introduite dans le réseau ou au moins une cellule radio du réseau présentant un problème de réseau. Ainsi, on peut appliquer une configuration de la couverture radio selon un mode de réalisation de la présente invention lors d'une nouvelle installation de cellule radio ou encore pour optimiser la couverture radio en cas de problème de réseau.

On peut avantageusement prévoir, lorsque la couverture radio effective de la cellule radio sélectionnée est inférieure, respectivement supérieure, à la couverture radio cible de la cellule radio sélectionnée, d'augmenter, respectivement de diminuer, la valeur de puissance de transmission de la cellule sélectionnée ; et/ou
lorsque la couverture radio effective d'au moins une des cellules radio voisines de la cellule radio sélectionnée est inférieure, respectivement supérieure, à la couverture radio cible de ladite au moins une des cellules radio voisines, on peut prévoir d'augmenter, respectivement diminuer, la valeur de puissance de transmission de ladite au moins une cellule radio voisine.

On peut prévoir de déclencher des étapes du procédé selon un déclenchement périodiquement, ou un déclenchement sur détection de problème de réseau ou un déclenchement sur introduction d'au moins une nouvelle cellule radio dans le réseau.

Un problème de réseau peut correspondre à l'un au moins parmi un taux de coupure supérieur à une valeur seuil de taux de coupure, un niveau de qualité de service inférieur à une valeur seuil de niveau de qualité de service et un trafic de données inférieur à une valeur seuil de trafic.

Les étapes /b/ à /e/ sont appliquées à chacune des cellules radio de l'ensemble d'au moins une cellule radio. Ainsi, lorsque plusieurs cellules radio sont concernées par la configuration de couverture radio, on les prend en compte successivement. On peut prévoir un ordre de sélection de cellule au sein de cet ensemble de cellule ou alors appliquer une sélection arbitraire.

Les informations cellulaires relatives à une cellule radio peuvent être relatives à une signature temporelle, une signature spatiale d'une cellule radio et une liste de cellules radio voisines de la cellule radio.

Une signature spatiale correspond à des informations caractérisant les dimensions de la couverture radio cible de la cellule radio considérée. Ces informations peuvent notamment être des valeurs d'affaiblissement (ou 'path loss' en anglais). Il est à noter que pour obtenir une bonne couverture radio effective, il est souhaitable que les échantillons d'affaiblissement soient répartis spatialement de manière équilibrée sur la zone de couverture cible d'une cellule radio donnée.

Une signature temporelle correspond à des informations permettant de caractériser un comportement dans le temps de la cellule radio et des environs géographiques de sa couverture radio effective. Une telle signature temporelle peut correspondre à un ensemble de statistiques basées sur l'évolution de certaines métriques effectuées périodiquement ou déclenchées sur un évènement. Une telle métrique peut correspondre à :
- des informations relatives à une valeur de puissance absolue d'un signal reçu par un terminal géré dans la cellule radio considérée, ou RSCP (pour 'Received Signal Code Power') ;
- des informations relatives à une valeur de rapport signal sur bruit, ou Ec/No, qui correspond à un rapport entre une valeur d'énergie par bit modulé et une valeur de densité spectrale du bruit total reçu au niveau d'un terminal dans la cellule radio considérée.

- un indicateur de charge de la cellule ;
- un indicateur de trafic dans la cellule ;
- un taux de coupure de communication dans la cellule ;
- un niveau d'interférence ;
- taux d'admission d'appel ;
- nombre de transfert d'appel entre cellules, ou encore 'handover'.

Un deuxième aspect de la présente invention propose une entité de configuration de couverture radio adaptée pour mettre en oeuvre les étapes d'un procédé de configuration de couverture radio selon le premier aspect de la présente invention.

Un troisième aspect de la présente invention propose un programme d'ordinateur destiné à être installé dans une entité de configuration selon le deuxième aspect de la présente invention, comprenant des instructions aptes à mettre en oeuvre le procédé selon le premier aspect de la présente invention, lors d'une exécution du programme par des moyens de traitement de l'entité de configuration.

Un quatrième aspect de la présente invention propose un support d'enregistrement lisible par un ordinateur sur lequel est enregistré le programme d'ordinateur selon le troisième aspect de la présente invention.

D'autres aspects, buts et avantages de l'invention apparaîtront à la lecture de la description d'un de ses modes de réalisation.

L'invention sera également mieux comprise à l'aide des dessins, sur lesquels:
- la figure 1 illustre une architecture de réseau de télécommunications selon un mode de réalisation de la présente invention ;
- la figure 2 illustre les principales étapes d'un procédé de configuration de couverture radio selon un mode de réalisation de la présente invention ;
- la figure 3 illustre une planification de la couverture radio d'un réseau selon un mode de réalisation de la présente invention ;
- la figure 4 illustre une optimisation de la couverture radio d'un réseau selon un mode de réalisation de la présente invention ; et
- la figure 5 illustre une entité de configuration de couverture radio selon un mode de réalisation de la présente invention.

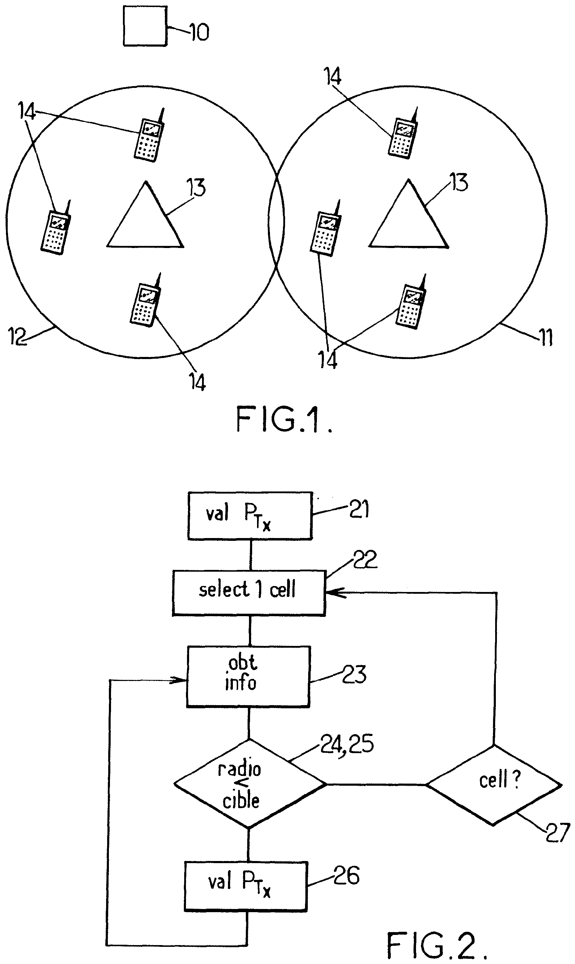

La figure 1 illustre une architecture de réseau de télécommunications selon un mode de réalisation de la présente invention. Un tel réseau comprend des stations de base 13 et des terminaux mobiles 14. Une station de base peut être en charge de la gestion d'une ou plusieurs cellules du réseau. Aucune limitation n'est attachée à la présente invention au regard de cet aspect. A titre d'exemple, ici, chaque cellule radio est gérée par une station de base. Des couvertures radio 11 et 12 sont respectivement associées aux stations de base 13.

Un tel réseau comprend en outre une entité de configuration de couverture radio 10. Cette entité de configuration est adaptée pour mettre en oeuvre un procédé de configuration de couverture radio de manière dynamique et automatique selon un mode de réalisation de la présente invention.

Aucune limitation n'est attachée à la présente invention au regard de l'emplacement de cette entité de configuration 10 dans le réseau. Dans un réseau de communication mobile, cette entité de configuration peut par exemple être située au niveau d'un OMC ('Operation and Maintenance Center' en anglais) ou d'un RNC ('Radio Network Controller' en anglais).

Au niveau de cette entité de configuration 10, il est prévu de déterminer une valeur de puissance de transmission des canaux communs pour une nouvelle cellule radio qui est en cours de mise en service, c'est-à-dire en cours de devenir une cellule radio opérationnelle.

La figure 2 illustre les principales étapes d'un procédé de configuration de couverture radio selon un mode de réalisation de la présente invention.

A une étape 21, on décide d'appliquer une puissance de transmission donnée à un ensemble d'au moins une cellule radio du réseau. Cette puissance de transmission peut correspondre à une valeur de puissance de transmission prédéfinie au niveau de l'entité de configuration, comme une valeur de puissance de transmission par défaut. Cette valeur peut avantageusement être définie en fonction de l'architecture du réseau considéré, en tant que paramètre de configuration du réseau.

En outre, l'ensemble d'au moins une cellule radio peut être déterminé en fonction du contexte dans lequel on déclenche ce procédé de configuration de couverture radio. En effet, si le procédé est déclenché par l'introduction d'une nouvelle cellule radio dans le réseau, alors l'ensemble de cellule(s) radio contient cette nouvelle cellule radio. Si plusieurs cellules radio sont introduites en même temps, alors l'ensemble de cellules radio contient ces nouvelles cellules radio.

Dans un autre cas, lorsque le procédé de configuration est déclenché pour une optimisation de la configuration de la couverture radio dans le réseau, l'ensemble des cellules radio contient la ou les cellules radio dans lesquelles des problèmes de réseau ont été détectés.

Puis, à une étape 22, une cellule radio parmi la pluralité de cellules radio du réseau est sélectionnée. Cette étape est utile uniquement lorsque l'ensemble de cellules radio contient plusieurs cellules radio. Dans ce cas, on sélectionne une cellule radio de l'ensemble de cellules radio considéré pour lui appliquer la suite des étapes à effectuer.

On peut prévoir de sélectionner la cellule radio sur laquelle appliquer les étapes ultérieures du procédé selon un ordre arbitraire au sein de l'ensemble de cellules radio. On peut alternativement prévoir de sélectionner selon un ordre prédéterminé successivement les cellules radio sur lesquelles vont être appliqué le procédé, cet ordre pouvant dépendre du contexte dans lequel on applique ce procédé de configuration de couverture radio.

Notamment, dans le cas d'une optimisation de la configuration de couverture radio, on peut par exemple prévoir de sélectionner en premier lieu la cellule radio qui présente une couverture radio effective la plus éloignée de la couverture radio cible qui lui est associée.

Puis, à une étape 23, des informations cellulaires sont obtenues relativement à la cellule radio sélectionnée et à ses cellules radio voisines.

De telles informations cellulaires peuvent correspondre à une signature spatiale et à une signature temporelle.

On peut prévoir d'obtenir de telles informations pendant une phase de surveillance de réseau qui est mise en oeuvre au niveau d'un utilisateur du réseau, ces informations pouvant être enregistrées au niveau de l'entité de configuration 10.

On peut également prévoir d'obtenir de telles informations sur la base de données reçues en temps réel pendant les communications gérées dans le réseau. On peut ainsi obtenir une valeur de puissance de transmission d'un canal commun de chaque cellule.

Il est possible également d'obtenir de telles informations à partir d'une approximation basée sur des prédictions de couverture radio qui sont elles mêmes obtenues via des outils de conception faisant appel à des modèles de propagation.

Des informations cellulaires peuvent correspondre à une signature temporelle et spatiale.

Puis, les informations cellulaires peuvent aussi correspondre à une liste des cellules radio voisines de la cellule radio considérée.

Sur la base des informations cellulaires, on est en mesure de comparer les couvertures radio effectives des cellules radio du groupe de cellules radio, qui est constitué de la cellule radio sélectionnée et de ses cellules radio voisines, avec les couvertures radio cibles de ces mêmes cellules radio, respectivement, aux étapes 24,25.

Ensuite, si la couverture radio effective d'au moins une cellule radio de ce groupe est inférieure à sa couverture radio cible, on détermine de nouvelles valeurs de puissance de transmission pour chacune des cellules radio concernées du groupe, c'est-à-dire pour la cellule radio sélectionnée et ses cellules radio voisines.

Ainsi, de nouvelles couvertures radio effectives sont mises en place et, de ce fait, une nouvelle configuration de couverture radio du réseau.

On itère alors l'étape 23 à laquelle on collecte de nouvelles informations cellulaires relatives à la cellule sélectionnée et ses cellules voisines, afin de pouvoir à nouveau comparer les couvertures radio effectives de ces cellules avec les couvertures radio cibles qui leur sont respectivement associées.

Puis, à l'itération des étapes 24, 25 on décide si de nouvelles valeurs de puissance de transmission doivent être déterminées ou non.

Ainsi, tant que la couverture radio effective globale de la cellule radio sélectionnée et de ses cellules radio voisines n'est pas supérieure ou égale à la couverture radio cible globale correspondante, c'est-à-dire l'ensemble des couvertures radio cibles associées respectivement aux cellules voisines et à la cellule sélectionnée, les étapes 23 à 26 sont réitérées.

Puis, lorsque cette condition est atteinte, les dernières valeurs de puissance de transmission respectivement affectées à ces différentes cellules sont conservées et appliquées.

Lorsque l'ensemble de cellules radio, auquel a été appliquée une valeur par défaut de puissance de transmission, comprend plusieurs cellules radio, on applique les étapes 23 à 26 à chacune des cellules radio de cet ensemble.

Ainsi, lorsque, relativement à la dernière cellule sélectionnée à l'étape 22, on a obtenu que les couvertures radio de cette cellule radio et de ses cellules radio voisines soient supérieures ou égales aux couvertures radio cibles de ces mêmes cellules, alors on vérifie s'il y a une autre cellule à sélectionner dans l'ensemble des cellules auxquelles a été appliquée la valeur par défaut de puissance de transmission, à une étape 27.

S'il reste dans cet ensemble de cellules radio, une cellule radio à laquelle le procédé n'a pas encore été appliqué, on passe à l'étape 22 afin de dérouler les mêmes étapes que décrites ci-avant relativement à cette cellule radio dernièrement sélectionnée.

La sélection successive des cellules radio au sein de l'ensemble de cellules radio peut être faite selon n'importe quel ordre, aucune limitation n'étant attachée à cet aspect selon la présente invention.

Il est prévu de déclencher un tel procédé de configuration de couverture radio dans différents contextes, comme le contexte d'une planification de couverture radio ou encore le contexte d'une optimisation de la couverture radio d'un réseau.

Un tel procédé de configuration de couverture radio comprend donc une allocation dynamique de puissance de transmission cellulaire. Il permet d'augmenter la puissance de transmission de cellule sélectionnée, ou/et de réduire la puissance de transmission des cellules radio qui lui sont voisines lorsque cette action ne dégrade pas la couverture radio cible des cellules voisines et assure une correspondance cohérente entre la signature spatiale de la nouvelle cellule et celles de ses voisines.

Afin de comparer les couvertures radio effectives et les couvertures radio cibles, on se base sur la signature temporelle et la signature spatiale. On peut, à cet effet, contrôler le fait que les valeurs de puissance absolues d'un signal reçu, ou valeurs de RSCP, et les valeurs de rapport signal sur bruit, ou Ec/No, sont supérieures à des valeurs seuil prédéterminées de couverture radio en tous les points qui forment la signature spatiale de la cellule radio considérée et de ses cellules radio voisines. On peut en outre prévoir de pondérer les valeurs en ces points par la fréquence de leur implication dans le trafic d'un nombre K de dernières communications.

Un tel procédé peut prendre en compte une marge de protection en puissance exprimée en pourcentage de façon à ce que la puissance calculée ne corresponde pas à 100% à la couverture radio cible. Cette marge permet d'isoler la cellule radio sélectionnée de ses cellules voisines.

Puis, avant de commencer à dégrader la couverture cible des cellules voisines en baissant leur puissance de transmission, on peut avantageusement prévoir de procéder à un changement de position de la nouvelle cellule. Dans ce cas, on est alors en mesure de dégrader la couverture radio des cellules radio voisines en dernier ressort.

Dans le cas où le procédé ne converge pas, même après un changement de position de la cellule radio, le procédé devrait assurer que la couverture radio cible de la nouvelle cellule radio et de ses cellules radio voisines est assurée au même niveau de marge de protection en puissance.

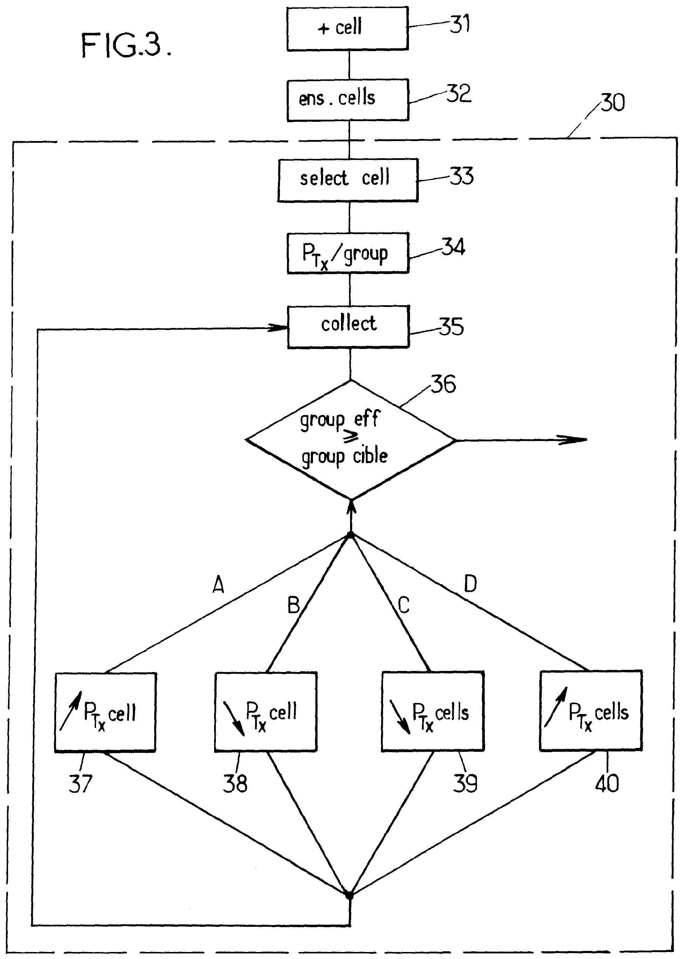

La figure 3 illustre une mise en oeuvre d'un procédé de configuration de couverture radio selon un mode de réalisation de la présente invention dans le contexte d'une planification de la couverture radio.

A une étape 31, une planification de couverture radio est déclenchée. Elle peut être déclenchée sur détection d'un évènement tel que par exemple, l'introduction d'une ou plusieurs nouvelles cellules radio dans le réseau, ou encore à la première installation du réseau de communication.

A une étape 32, on détermine un ensemble d'au moins une cellule radio sur lesquelles il est prévu d'appliquer certaines étapes du procédé de configuration selon un mode de réalisation de la présente invention. Cet ensemble comprend ici toutes les cellules radio nouvellement introduites dans le réseau, ou encore toutes les cellules radio dans le contexte d'une installation du réseau cellulaire.

Ensuite, on sélectionne une cellule radio dans cet ensemble à une étape 33. Puis, on définit un groupe de cellules radio auquel on applique une valeur par défaut de puissance de transmission. Ce groupe de cellules radio comprend la cellule radio sélectionnée et des cellules radio qui lui sont voisines, c'est-à-dire des cellules qui ont une zone géographique de couverture radio voisine de celle de la cellule sélectionnée.

Puis, à une étape 34, un changement de configuration de couverture radio du réseau est alors effectué : une valeur de puissance de transmission par défaut est appliquée à toutes les cellules radio de ce groupe.

Ensuite, afin de déterminer l'impact que ce changement de configuration de couverture radio a dans le réseau, on obtient des informations relatives à chaque cellule du groupe des cellules radio, à une étape 35.

Ce contrôle de la couverture radio peut être basé sur différents types d'information qui caractérisent une cellule radio, comme listées ci-avant, relativement à la signature temporelle et spatiale, ainsi que la liste de cellules radio voisines.

On peut également prend en compte ici une information relative à une marge de protection en puissance pour caractériser une cellule radio. Une telle marge de protection est en général exprimée en pourcentage de la couverture radio cible et est appliquée pour éviter des interférences avec des cellules radio voisines.

Ensuite, dans un mode de réalisation de la présente invention, on peut se baser sur des informations relatives à la signature temporelle des cellules radio pour décider si les valeurs de puissance de transmission précédemment affectées sont satisfaisantes ou non.

Sur la base de ces informations cellulaires, on est ensuite en mesure de comparer les différentes couvertures radio cellulaires effectives des différentes cellules radio du groupe de cellules considéré avec les différentes couvertures radio cibles qui leur sont respectivement associées.

Un objectif de couverture radio d'un tel procédé de configuration de couverture radio est d'obtenir une configuration dans laquelle les couvertures radio effectives des cellules radio du groupe de cellules radio considéré sont supérieures ou égales aux couvertures radio cibles des cellules de ce groupe.

Ainsi, à une étape 36, on compare donc respectivement les couvertures radio des cellules radio effectives du groupe de cellules considéré avec les couvertures radio cibles des cellules de ce groupe.

Si l'objectif de couverture radio est atteint alors on ne modifie plus les valeurs de puissance de transmission de ces cellules.

Dans le cas contraire, on modifie certaines valeurs de puissance de transmission dans certaines de ces cellules radio en fonction des différents cas qui peuvent se produire.

Ainsi, dans le cas A, lorsque la couverture radio effective de la nouvelle cellule radio est inférieure à la couverture radio cible de cette nouvelle cellule, alors on augmente la valeur de puissance de transmission de cette nouvelle cellule radio à une étape 37.

Dans le cas B, lorsque la couverture radio effective de la nouvelle cellule radio est supérieure à la couverture radio cible de cette nouvelle cellule, alors on diminue la valeur de puissance de transmission de cette nouvelle cellule radio à une étape 38.

Dans le cas C, lorsque la couverture radio effective d'au moins une des cellules voisines de la nouvelle cellule radio est inférieure à sa couverture radio cible, alors on diminue la valeur de puissance de transmission de cette cellule radio voisine de la nouvelle cellule radio à une étape 39.

Dans le cas D, lorsque la couverture radio effective d'au moins une des cellules voisines de la nouvelle cellule radio est supérieure à sa couverture radio cible, alors on augmente les valeurs de puissance de transmission de cette cellule radio voisine de la nouvelle cellule radio à une étape 40.

Ces contextes A, B, C et D peuvent être testés dans un ordre arbitraire, ou encore dans un ordre préétabli.

A l'issue de chacune des étapes 37, 38, 39 ou 40, on itère les étapes du procédé de configuration de couverture radio à partir de l'étape 35.

Afin d'éviter de réitérer sans succès un grand nombre de fois toutes ces étapes, il peut avantageusement être prévu de limiter le nombre d'itérations à un nombre maximum N.

Dans ces conditions, lorsque, après N itérations de l'étape 35, l'ensemble des couvertures radio effectives de la nouvelle cellule et de ses cellules voisines est inférieur ou égal à l'ensemble des couvertures radio cibles correspondantes, alors on peut prévoir de l'indiquer sur la station de base, par exemple par un signe lumineux.

Un tel signe lumineux indique alors qu'un changement de position de la station de base est requis pour pouvoir obtenir une configuration de la couverture radio globale selon un mode de réalisation de la présente invention. Puis, une fois qu'une telle intervention manuelle a été réalisée sur la station de base, alors on peut déclencher à nouveau le procédé de configuration selon un mode de réalisation de la présente invention à partir de l'étape 34.

La succession des étapes 33-40 est référencée 30.

Les étapes d'un procédé de configuration de la couverture radio d'un réseau radio cellulaire peuvent être mises en oeuvre dans le contexte d'une optimisation de la couverture radio.

Aucune limitation n'est attachée au type de déclenchement d'une telle optimisation automatique de la configuration de la couverture radio au regard de la présente invention.

On peut notamment prévoir que ce procédé est dans ce cas déclenché régulièrement et périodiquement dans le temps.

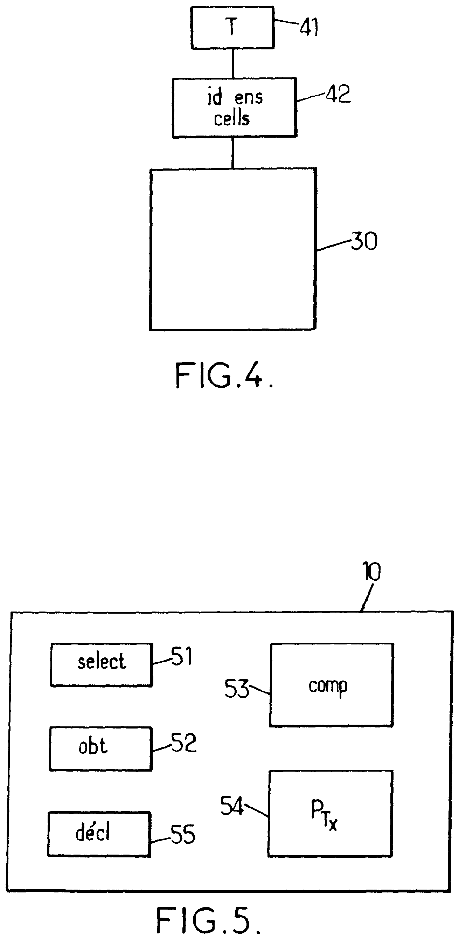

Alors, les étapes d'un tel procédé sont illustrées à la figure 4.

A une étape 41, on déclenche le procédé de configuration de couverture radio après une période de temps donnée, ou encore à une heure précise.

A une étape 42, on interroge le réseau pour décider si des problèmes de réseau sont présents ou non. A cet effet, on peut prévoir d'obtenir des informations relatives à un taux de coupure ou encore des informations relatives à un niveau de qualité de service ou des informations relatives à un trafic de communication. Ces informations peuvent être collectées par cellule dans le réseau.

Ainsi, si certaines de ces informations indiquent un problème de réseau, on est en mesure d'identifier une cellule ou un ensemble de cellules radio qui sont à l'origine de ce ou ces problèmes de réseau détectés.

On dispose alors d'un ensemble d'au moins une cellule radio auquel on souhaite appliquer le procédé de configuration de couverture radio.

L'issue de l'étape 42 dans le contexte d'une planification de couverture radio correspond à l'issue de l'étape 32 dans le contexte d'une optimisation de couverture radio.

Ensuite la même succession d'étapes 30 que celle décrite en référence à la figure 3 peut avantageusement être appliquée ici, afin d'obtenir au sein de cet ensemble de cellules radio, une couverture radio globale effective qui soit supérieure ou égale à la couverture radio globale cible correspondante.

Dans une alternative, on peut prévoir de déclencher une configuration de couverture radio selon un mode de réalisation de la présente invention sur détection de problème de réseau. En effet, l'entité de configuration peut être adaptée pour recevoir des informations cellulaires qui permettent une telle détection de problème de réseau.

Par exemple, on peut déclencher une configuration de couverture radio automatique selon un mode de réalisation de la présente invention, sur détection d'un taux de coupure supérieur à une valeur déterminée. On peut également prévoir de déclencher cette configuration de couverture radio sur détection d'un niveau de qualité de service qui est inférieur à un niveau de qualité de service requis dans le réseau considéré, ou lorsque des informations relatives à un trafic de communication indiquent un niveau inférieur à une valeur seuil.

Dans ces conditions, comme cela est décrit ci-avant, on prend en considération un ensemble de cellules radio qui ont été détectées comme posant problème et on applique alors à cet ensemble de cellules radio un procédé de configuration de couverture radio selon un mode de réalisation de la présente invention.

La figure 5 illustre une entité de gestion de couverture radio selon un mode de réalisation de la présente invention.

Elle peut comprendre :
- une unité de sélection 51 adaptée pour sélectionner une cellule radio parmi ledit ensemble de cellules radio déterminé ;
- une unité d'obtention 52 adaptée pour obtenir des informations cellulaires relativement à un groupe de cellules comprenant la cellule radio sélectionnée et des cellules voisines ;
- une unité de comparaison 53 adaptée pour comparer, sur la base des informations cellulaires, les couvertures radio effectives des cellules dudit groupe et les couvertures radio cibles respectives des cellules dudit groupe ; et
- une unité de gestion de puissance de transmission 54 adaptée pour :
   - appliquer (21) une valeur de puissance de transmission donnée à un ensemble d'au moins une cellule radio déterminé parmi la pluralité de cellules radio ; et
   - appliquer (26) de nouvelles valeurs de puissance de transmission respectivement aux cellules radio dudit groupe de cellules ; si la couverture radio effective d'au moins une cellule radio dudit groupe de cellules radio est inférieure à la couverture radio cible de ladite au moins une cellule radio du groupe (25).

Elle peut également comprendre en outre une unité de déclenchement 55 de configuration de couverture radio sur détection de problème de réseau et sur introduction d'au moins une nouvelle cellule radio dans le réseau.

Une telle entité de configuration 10 est adaptée pour mettre en oeuvre une planification et une optimisation globale du réseau selon un procédé tel que décrit ci-avant. Elle est donc en mesure de résoudre certains conflits entre différentes cellules en permettant de déterminer un compromis entre les différentes couvertures radio qui pourraient résulter d'une décision d'attribution de puissance de transmission au niveau local issue d'un procédé d'attribution de puissance de canaux communs aux cellules.

Une telle gestion de configuration de la couverture radio dans un réseau permet une planification et une optimisation automatique et dynamique, sans effort de la part de l'opérateur ni de l'utilisateur final. Cette configuration repose ici sur la détermination de valeurs de puissance de transmission sur au moins un canal commun des cellules radio.

Une telle gestion de configuration est notamment bien adaptée à des réseaux ayant une couche de cellules qui ont une haute densité, un accès restreint, et qui sont dédiées à une utilisation dans un cadre résidentiel ou professionnel (également appelées "femtocellules"). En outre, une telle gestion peut résoudre dynamiquement des problèmes d'interférences dues à un déploiement non coordonné de cellules de type 'Plug and Play', et elle permet d'améliorer la qualité de service globale du réseau.

Ces dispositions permettent à l'opérateur d'éviter tout effort de planification ou d'optimisation des puissances impliquant un personnel qualifié ou encore l'utilisateur final de la couverture radio. Elles permettent d'automatiser ces deux types de configurations et de résoudre dynamiquement des problèmes d'inférences dues à un déploiement non coordonné de cellules radio. Elles permettent également d'améliorer la qualité de service globale du réseau.

## Revendications

1. Procédé de configuration de couverture radio dans un réseau de communications radio cellulaire comprenant une pluralité de cellules radio ;
une couverture radio cible étant associée à chacune des cellules radio ;
chaque cellule radio opérationnelle fournissant une couverture radio effective définie par une valeur de puissance de transmission de ladite cellule radio ;
ledit procédé comprenant les étapes suivantes :
/a/ appliquer (21) une valeur de puissance de transmission donnée à un ensemble d'au moins une cellule radio déterminé parmi la pluralité de cellules radio ;
/b/ sélectionner (22) une cellule radio parmi ledit ensemble de cellules radio déterminé ;
/c/ obtenir (23) des informations cellulaires relativement à un groupe de cellules radio comprenant la cellule radio sélectionnée et des cellules voisines ;
/d/ sur la base des informations cellulaires, comparer (24) les couvertures radio effectives des cellules dudit groupe et les couvertures radio cibles respectives des cellules dudit groupe ;
/e/ si la couverture radio effective d'au moins une cellule radio dudit groupe de cellules radio est inférieure à la couverture radio cible de ladite au moins une cellule radio (25) du groupe :
- appliquer (26) de nouvelles valeurs de puissance de transmission respectivement aux cellules radio dudit groupe de cellules ; et
- itérer les étapes /c/ à /e/.
ledit procédé étant **caractérisé en ce qu'**il comprend en outre les étapes de :
limiter le nombre d'itérations /c/ à /e/ à un nombre maximum et,
si l'ensemble des couvertures radio effectives des cellules dudit groupe et de ses cellules voisines est inférieur ou égal à l'ensemble des couvertures radio cibles correspondantes,
indiquer sur une station de base appartenant à ce réseau de communications radio qu'un changement de position de ladite station de base est requis pour pouvoir obtenir une configuration de la couverture radio globale.

2. Procédé de configuration de couverture radio selon la revendication 1, dans lequel les nouvelles valeurs de puissance de transmission sont déterminées sur la base d'une comparaison entre les couvertures radio effectives et les couvertures radio cibles respectives des cellules du groupe de cellules radio.

3. Procédé de configuration de couverture radio selon la revendication 1 ou 2, dans lequel, à l'étape /e/,
lorsque la couverture radio effective de la cellule radio sélectionnée est inférieure, respectivement supérieure, à la couverture radio cible de la cellule radio sélectionnée, on augmente, respectivement diminue, la valeur de puissance de transmission de la cellule sélectionnée ;
et/ou
lorsque la couverture radio effective d'au moins une des cellules radio voisines de la cellule radio sélectionnée est inférieure, respectivement supérieure, à la couverture radio cible de ladite au moins une cellules radio voisine, on augmente, respectivement diminue, la valeur de puissance de transmission de ladite au moins une cellule radio voisine.

4. Procédé de configuration de couverture radio selon la revendication 1, dans lequel l'ensemble d'au moins une cellule radio est un ensemble comprenant au moins une nouvelle cellule radio introduite dans le réseau ou au moins une cellule radio du réseau présentant un problème de réseau.

5. Procédé de configuration de couverture radio selon la revendication 1, dans lequel un déclenchement des étapes du procédé appartient au groupe comprenant:
- un déclenchement périodiquement;
- un déclenchement sur détection de problème de réseau;
- un déclenchement sur introduction d'au moins une nouvelle cellule radio dans le réseau.

6. Procédé de configuration de couverture radio selon la revendication 1, dans lequel les étapes /b/ à /e/ sont appliquées à chacune des cellules radio de l'ensemble d'au moins une cellule radio.

7. Procédé de configuration de couverture radio selon la revendication 1, dans lequel les informations cellulaires d'une cellule radio sont relatives à une signature temporelle, une signature spatiale d'une cellule radio et une liste des cellules radio voisines de ladite cellule radio.

8. Procédé de configuration de couverture radio selon la revendication 1, dans lequel l'étape d'indiquer sur ladite station de base qu'un changement de position de ladite station de base est requis pour pouvoir obtenir une configuration de la couverture radio globale sur ladite station de base est obtenue par un signe lumineux sur ladite station de base.

9. Programme d'ordinateur destiné à être installé dans une entité de configuration de couverture radio dans un réseau de communications radio cellulaire, comprenant des instructions aptes à mettre en oeuvre le procédé selon l'une quelconque des revendications 1 à 8, lors d'une exécution du programme par des moyens de traitement de ladite entité de configuration.

10. Support d'enregistrement lisible par un ordinateur sur lequel est enregistré le programme d'ordinateur selon la revendication 9.

## Patentansprüche

1. Verfahren zum Konfigurieren einer Funkabdeckung in einem Funkzellen-Kommunikationsnetzwerk, das mehrere Funkzellen umfasst;
wobei jeder Funkzelle eine Ziel-Funkabdeckung zugeordnet ist;
wobei jede betriebsbereite Funkzelle eine effektive Funkabdeckung bereitstellt, die durch einen Sendeleistungswert der Funkzelle definiert ist;
wobei das Verfahren die folgenden Schritte umfasst:
/a/ Anwenden (21) eines gegebenen Sendeleistungswerts auf einen bestimmten Satz aus mindestens einer Funkzelle aus den mehreren Funkzellen;
/b/ Auswählen (22) einer Funkzelle aus dem bestimmten Satz von Funkzellen;
/c/ Erhalten (23) von Zelleninformationen in Bezug auf eine Gruppe von Funkzellen, die die ausgewählte Funkzelle und benachbarte Zellen umfassen;
/d/ Vergleichen (24), auf der Basis der Zelleninformationen, der effektiven Funkabdeckungen der Zellen der Gruppe und der jeweiligen Ziel-Funkabdeckungen der Zellen der Gruppe;
/e/ wenn die effektive Funkabdeckung mindestens einer Funkzelle der Funkzellengruppe kleiner ist als die Ziel-Funkabdeckung der mindestens einen Funkzelle (25) der Gruppe:
- Anwenden (26) jeweils neuer Sendeleistungswerte auf die Funkzellen der Gruppe von Zellen; und
- Wiederholen der Schritte /c/ bis /e/.
wobei das Verfahren **dadurch gekennzeichnet ist, dass** es ferner die folgenden Schritte umfasst:
Begrenzen der Anzahl der Wiederholungen /c/ bis /e/ auf eine maximale Anzahl, und,
wenn der Satz aus effektiven Funkabdeckungen der Zellen der Gruppe und deren benachbarter Zellen kleiner oder gleich der Gesamtheit der entsprechenden Ziel-Funkabdeckungen ist,
Anzeigen an einer Basisstation, die zu diesem Funkkommunikationsnetzwerk gehört, dass eine Positionsänderung der Basisstation erforderlich ist, um eine Konfiguration zur globalen Funkabdeckung erhalten zu können.

2. Verfahren zum Konfigurieren einer Funkabdeckung nach Anspruch 1, wobei die neuen Sendeleistungswerte auf der Basis eines Vergleichs zwischen den effektiven Funkabdeckungen und den jeweiligen Ziel-Funkabdeckungen der Zellen der Gruppe von Funkzellen bestimmt werden.

3. Verfahren zum Konfigurieren einer Funkabdeckung nach Anspruch 1 oder 2, wobei in Schritt /e/,
wenn die effektive Funkabdeckung der ausgewählten Funkzelle kleiner bzw. größer ist als die Ziel-Funkabdeckung der ausgewählten Funkzelle, der Sendeleistungswert der ausgewählten Zelle erhöht bzw. verringert wird;
und/oder
wenn die effektive Funkabdeckung von mindestens einer der benachbarten Funkzellen der ausgewählten Funkzelle kleiner bzw. größer ist als die Ziel-Funkabdeckung der mindestens einen benachbarten Funkzelle, der Sendeleistungswert der mindestens einen benachbarten Funkzelle erhöht bzw. verringert wird.

4. Verfahren zum Konfigurieren einer Funkabdeckung nach Anspruch 1, wobei der Satz aus mindestens einer Funkzelle ein Satz ist, der mindestens eine neue Funkzelle umfasst, die in das Netzwerk eingeführt wird, oder mindestens eine Funkzelle des Netzwerks, bei der ein Netzwerkproblem auftritt.

5. Verfahren zum Konfigurieren einer Funkabdeckung nach Anspruch 1, wobei die Schritte des Verfahrens auf mindestens eine der folgenden Arten ausgelöst werden:
- ein periodisches Auslösen;
- ein Auslösen beim Erkennen eines Netzwerkproblems;
- ein Auslösen beim Einführen mindestens einer neuen Funkzelle in das Netzwerk.

6. Verfahren zum Konfigurieren einer Funkabdeckung nach Anspruch 1, wobei die Schritte /b/ bis /e/ auf jede der Funkzellen des Satzes aus mindestens einer Funkzelle angewendet werden.

7. Verfahren zum Konfigurieren einer Funkabdeckung nach Anspruch 1, wobei sich die Zelleninformationen einer Funkzelle auf eine zeitliche Signatur, eine räumliche Signatur einer Funkzelle und eine Liste von benachbarten Funkzellen der Funkzelle beziehen.

8. Verfahren zum Konfigurieren einer Funkabdeckung nach Anspruch 1, wobei der Schritt zum Anzeigen an der Basisstation, dass eine Positionsänderung der Basisstation erforderlich ist, um eine Konfiguration zur globalen Funkabdeckung an der Basisstation erhalten zu können, durch ein Lichtzeichen an der Basisstation erhalten wird.

9. Computerprogramm zum Installieren in einer Einheit zum Konfigurieren einer Funkabdeckung in einem Funkkommunikationsnetzwerk, das Anweisungen umfasst, die geeignet sind, das Verfahren nach einem der Ansprüche 1 bis 8 zu implementieren, wenn das Programm durch Verarbeitungseinrichtungen der Konfigurationseinheit ausgeführt wird.

10. Computerlesbares Speichermedium, auf dem das Computerprogramm nach Anspruch 9 gespeichert ist.

## Claims

1. A method for configuring a radio coverage in a cellular radio communications network comprising a plurality of radio cells;
a target radio coverage being associated with each of the radio cells;
each operational radio cell providing an effective radio coverage defined by a transmission power value of said radio cell;
said method comprising the following steps:
/a/ applying (21) a given transmission power value to a set of at least one radio cell determined from the plurality of radio cells;
/b/ selecting (22) a radio cell from said determined set of radio cells;
/c/ obtaining (23) cellular information relative to a group of radio cells comprising the selected radio cell and neighbour cells;
/d/ based on the cellular information, comparing (24) the effective radio coverages of the cells of said group and the respective target radio coverages of the cells of said group;
/e/ if the effective radio coverage of at least one radio cell of said group of radio cells is lower than the target radio coverage of said at least one radio cell (25) of the group:
- applying (26) new transmission power values to the radio cells of said group of cells, respectively; and
- iterating steps /c/ to /e/.
said method being **characterised in that** it further comprises the steps of:
limiting the number of iterations /c/ to /e/ to a maximum number and,
if the set of effective radio coverages of the cells of said group and of its neighbour cells is lower than or equal to the set of corresponding target radio coverages,
indicating on a base station belonging to this radio communications network that a change in the position of said base station is required to be able to obtain a global configuration of the radio coverage.

2. The method for configuring a radio coverage according to claim 1, wherein the new transmission power values are determined on the basis of a comparison between the effective radio coverages and the respective target radio coverages of the cells of the group of radio cells.

3. The method for configuring a radio coverage according to claim 1 or 2, wherein, in step /e/,
when the effective radio coverage of the selected radio cell is lower, respectively greater, than the target radio coverage of the selected radio cell, the transmission power value of the selected cell is increased, respectively decreased;
and/or
when the effective radio coverage of at least one of the neighbour radio cells of the selected radio cell is lower, respectively greater, than the target radio coverage of said at least one neighbour radio cell, the transmission power value of said at least one neighbour radio cell is increased, respectively decreased.

4. The method for configuring a radio coverage according to claim 1, wherein the set of at least one radio cell is a set comprising at least one new radio cell introduced into the network or at least one radio cell of the network having a network problem.

5. The method for configuring a radio coverage according to claim 1, wherein a triggering of the steps of the method belongs to the group comprising:
- a periodical triggering;
- a triggering upon detecting a network problem;
- a triggering upon introducing at least one new radio cell into the network.

6. The method for configuring a radio coverage according to claim 1, wherein steps /b/ to /e/ are applied to each of the radio cells of the set of at least one radio cell.

7. The method for configuring a radio coverage according to claim 1, wherein the cellular information of a radio cell is related to a time signature, a space signature of a radio cell and a list of neighbour radio cells of said radio cell.

8. The method for configuring a radio coverage according to claim 1, wherein the step of indicating on said base station that a change in the position of said base station is required to be able to obtain a global configuration of the radio coverage on said base station is obtained by a light sign on said base station.

9. A computer program for being installed in a radio coverage configuration entity in a cellular radio communications network, comprising instructions able to implement the method according to any of claims 1 to 8, upon executing the program by processing means of said configuration entity.

10. A computer readable recording medium on which the computer program according to claim 9 is recorded.
